# EUROPÄISCHE PATENTSCHRIFT

(11) **EP 0 658 175 B1**
(45) Veröffentlichungstag und Bekanntmachung des Hinweises auf die Patenterteilung: **21.10.1998**
(21) Anmeldenummer: 94922872.0
(22) Anmeldetag: 01.07.1994
(51) Int. Cl.: C08J 5/18, B29D 7/01, B32B 27/32, C08L 23/10

(54) **FOLIE AUF DER BASIS VON POLYMERISATEN DES ETHYLENS UND PROPYLENS SOWIE DEREN VERWENDUNG**
SHEETING MADE FROM POLYMERS OF ETHYLENE AND PROPYLENE, AND ITS USE
FEUILLE A BASE DE POLYMERES D'ETHYLENE ET DE PROPYLENE ET SON UTILISATION

(30) Priorität: 02.07.1993 DE 4322140
(43) Veröffentlichungstag der Anmeldung: 21.06.1995
(73) Patentinhaber: Benecke-Kaliko Aktiengesellschaft, D-30419 Hannover (DE)
(72) Erfinder: LEISS, Dirk, D-30916 Isernhagen (DE)
(74) Vertreter: Hagemann, Heinrich, Dr.rer.nat., Dipl.-Chem.
(86) Internationale Anmeldenummer: EP9402158
(87) Internationale Veröffentlichungsnummer: WO9501390

(56) Entgegenhaltungen:
- EP-A- 0 235 930
- EP-A- 0 444 671
- EP-A- 0 462 373
- DE-A- 3 015 465
- DE-A- 4 121 599
- DATABASE WPI Week 7813, Derwent Publications Ltd., London, GB; AN 78-24275A & JP,A,53 016 748 (AICELLO KAGAKU) 16. Februar 1978
- DATABASE WPI Week 8442, Derwent Publications Ltd., London, GB; AN 84-259572 & JP,A,59 157 136 (CALP KOGYO) 6. September 1984
- DATABASE WPI Week 9018, Derwent Publications Ltd., London, GB; AN 90-134587 & JP,A,2 080 454 (TONEN) 20. März 1990

## Beschreibung

Die Erfindung betrifft eine Kunststoffolie auf der Basis von Polymerisaten des Propylens und Ethylens, die gegebenenfalls Verarbeitungshilfsmittel, Füllstoffe, Pigmente oder andere Zusatzmittel enthält, sowie deren Einsatz in Form einer selbstklebenden Dekorfolie zur Beschichtung beliebiger Gegenstände oder Formteile.

Aus der EP-A-0 343 491 gehen Oberflächenfolien zum Kaschieren beliebiger Gegenstände hervor. Diese Folien sollen auf die Oberflächen von Gegenständen, z.B. Türen, Gestellen, Gehäusen aus Kunststoff, Holz, Holzwerkstoffen, Metallen oder ähnlichen Werkstoffen bzw. Substraten, in eingefärbter, ungefärbter und/oder gemusterter Form aufgetragen werden, um gegen verschiedene nachteilige Einflüsse, wie beispielsweise gegen Korrosion, Verfärbung durch Licht oder mechanische Einwirkung, Schutz zu bieten. Unter Umständen soll sie die Oberfläche der angesprochenen Gegenstände ansprechender gestalten. So kann eine derartige gemusterte Folie durch oberflächliches Kaschieren den Eindruck wertvollen Holzes erwecken, wenngleich ein Gegenstand herangezogen wird, der aufgrund seiner Beschaffenheit, Struktur, Oberfläche oder Farbe dazu nicht geeignet ist. Die aus der EP-A-0 343 491 ersichtliche Oberflächenfolie weist eine Grundfolie aus einem Polymerisat der Methacrylatgruppe auf. Das Polymerisat kann durch den Zusatz von Polyacrylaten modifiziert werden. Besonders geeignet soll ein durch Polybutylmethacrylat (PBMA) flexibilisiertes Polymethylmethacrylat (PMMA) sein. Die bekannte Oberflächenfolie soll eine verbesserte Licht- und Wetterbeständigkeit zeigen. Es hat sich bei der Überprüfung dieser Folie gezeigt, daß sie verbesserungsbedürftig ist. So zeigt ein flexibilisiertes PMMA relativ hohen Weißbruch. Selbst wenn dieses Material schlagzäh eingestellt wird, liefert es nur eine niedrige Kerbschlagzähigkeit. Ferner zeigt es unbefriedigend niedrige Benetzbarkeits- bzw. Oberflächenspannungswerte. Hohe Oberflächenspannungswerte sind für die Bedruckbarkeit der Grundfolie sowie für die Verklebbarkeit (Haftung zwischen einer Klebstoffschicht und der Grundfolie) von Bedeutung, wenn diese auf ein Substrat aufgeklebt werden soll. So hat eine Grundfolie aus PMMA lediglich eine Oberflächenspannung von 36 bis 38 dyn/cm (gemessen nach DIN 53 364).

Aus der DE-OS 41 21 599 geht eine Folie der eingangs bezeichneten Art hervor, die eine Ethylen-Propylen-Copolymerisat enthaltende Grundfolie aufweist, die Verarbeitungshilfs- und/oder Zusatzmittel und gegebenenfalls mindestens ein Farbpigmentgemisch und/oder Füllstoffe enthält. Auf der Unterfläche oder Unterseite der Grundfolie ist eine Klebeschicht sowie gegebenenfalls eine Abdeckschicht sowie Releaseschicht angeordnet. Dabei kann die Grundfolie gegebenenfalls mit einer Prägung und/oder Farbdruckschicht versehen sein. Das eingesetzte Ethylen-Propylen-Copolymerisat der 50 bis 150 µm dicken Grundfolie weist einen MFI-Wert (230°C/2kg) von über 3g/10min und eine Zugfestigkeit über 30 N/mm². Diese Folie wird als selbstklebende Dekorfolie zur Beschichtung von Glas, Blechen, Papier, Pappe sowie anderen Gegenständen oder Formteilen aus Metall, Holz und Holzwerkstoff verwendet. Die bekannte Folie soll vorzugsweise eine Shore-Härte D von 55 bis 70 haben. Aufgrund der besonderen Ausgangsmaterialien dieser bekannten Folie ist deren Steifigkeit nicht zufriedenstellend. Die Steifigkeit ist bei der Verwendung einer derartigen Folie zum Kaschieren von Holz und anderen Teilen wichtig. Höhere Steifigkeit bewirkt eine Herabsetzung der Schreib- und Kratzempfindlichkeit der aufkaschierten Folie.

Ausgehend von dem vorstehend geschilderten Stand der Technik lag der Erfindung die Aufgabe zugrunde, die eingangs bezeichnete Folie so weiterzubilden, daß insbesondere die Oberflächenspannungswerte der Oberfolie angehoben, deren Kerbschlagzähigkeit verbessert und deren Weißbruch möglichst ausgeschlossen wird. In dem Falle, daß sie als Kaschierfolie eingesetzt wird, soll die aufkaschierte Folie eine herabgesetzte Schreib- und Kratzempfindlichkeit aufweisen.

Erfindungsgemäß wird diese Aufgabe durch eine Kunststoffolie gelöst, die dadurch gekennzeichnet ist, daß sie
a) ein Polymerisat des Propylens mit bis zu 10 Mol-% eines oder mehrerer Comonomere mit einem MFI-Wert (230°C/2,16kg) von 0,8 bis 3,0g/10min, einem Schmelzpunkt Tm von 154 bis 168°C (bestimmt mit DSC) und einem E-Modul von 900 bis 1500 N/mm² (bestimmt nach DIN 53 457),
b) ein Polymerisat des Ethylens mit bis zu 10 Mol-% eines oder mehrerer Comonomere mit einem MFI-Wert (190°C/2,16kg) von 1,5 bis 3,0g/10min, einem Schmelzpunkt Tm von 110 bis 130°C und einem E-Modul von 200 bis 400 N/mm² und
c) ein Ethylen-Propylen-Copolymerisat mit einem MFI-Wert (230°C/2,16kg) von 1 bis 4g/l0min, einem Schmelzpunkt Tm von 140 bis 155°C und einem E-Modul von 400 bis 700 N/mm² enthält, wobei auf 100 Gew.-Teile Polymerisat des Propylens 5 bis 20 Gew.-Teile des Polymerisats des Ethylens und 5 bis 40 Gew.-Teile des Ethylen-Propylen-Copolymerisats entfallen.

Die Abkürzung "DSC" bedeutet Differential Scanning Calorimetry und wird im einzelnen beschrieben in Marti et al., "Angewandte chemische Thermodynamik und Thermoanalytik (Experimenta Suppl. 37), Basel: Birkhäuser 1979.

Eine besondere Ausgestaltung der erfindungsgemäßen Kunststoffolie bezüglich der oben angegebenen physikalischen Werte geht aus Anspruch 2 hervor.

Im Sinne der vorliegenden Erfindung kann das Polymerisat des Ethylens sowie das Polymerisat des Propylens bis zu 10 Mol-% eines oder mehrerer Comonomere enthalten, insbesondere in Form von Isopren, 1,3-Butadien, Ethylen (im Falle des Polymerisats des Propylens), Propylen (im Falle des Polymerisats des Ethylens), Buten, Hexen und Octen bzw. deren Isomere. Demzufolge können andere Monomereneinheiten einbezogen sein, sofern dadurch nicht die mit der Erfindung angestrebten Effekte beeinträchtigt werden. Vorzugsweise hat das unter dem obigen Begriff "Polymerisat" fallende Homopolymerisat des Propylens eine enge Molekulargewichtsverteilung. Derartige Produkte werden im Handel als CR-Produkte erhalten (CR = Controlled Rheology). Als Homopolymerisat des Ethylens ist insbesondere ein solches Produkt geeignet, das ein niedrig-dichtes Homopolymerisat des Ethylens mit linearer Struktur (LLDPE) oder ein unter hohem Druck hergestelltes Polyethylen niedriger Dichte (LDPE) enthält.

Die Eigenschaften der erfindungsgemäßen Kunststoffolie können durch Zusatzstoffe, die in den theroplastischen Kunststoff eingearbeitet werden, modifiziert werden. So können im Kunststoff beispielsweise Füllstoffe, wie Metalloxide, Metallcarbonate, insbesondere Calciumcarbonate und Dolomit, Metalldioxide und Metallhydroxide, Gleitmittel, wie C₁₂-C₃₆-Fettsäuren, Fettalkohole, Fettsäureester und -amide, Farbmittel in Form von Farbpigrnenten, z.B. Titandioxid oder Ruß, sowie organische Farbstoffe, Stabilisatoren, wie Oxidationsverzögerer und Wärmestabilisatoren, z.B. sterisch gehinderte Phenole, Hydrochinone, substituierte Vertreter dieser Gruppe und Mischungen derselben, UV-Stabilisatoren, z.B. verschiedene substituierte Resorcine, Salicylate, Benzotriazole und Benzophenone, sowie andere übliche Modifizierungsmittel enthalten sein. Auch können als Zusatzstoffe Verarbeitungshilfsmittel, wie hochmolekulare Acrylate oder Acrylat-Copolymere, herangezogen werden. Sie steuern die Fließeigenschaften des Schmelzprozesses während der Verarbeitung. Die Folie kann anhand der Ausgangsmischung, die die oben bezeichneten Verbindungen enthält, nach beliebigen Techniken hergestellt werden, so z.B. durch Extrudieren, Kalandrieren und dergleichen.

Bei einer besonders vorteilhaften Ausgestaltung der erfindungsgemäßen Kunststoffolie entfallen auf 100 Gew.-Teile Homopolymerisat des Propylens etwa 5 bis 40 Gew.-Teile, insbesondere etwa 10 bis 25 Gew.-Teile des Ethylen-Propylen-Copolymerisats. Das Ethylen-Propylen-Copolymerisat weist einen MFI-Wert (230°C/2,16kg) von etwa 1 bis 4g/10min, einen Schmelzpunkt Tm von etwa 140 bis 155°C und einen E-Modul von etwa 400 bis 700 N/mm² auf. Wird eine derartige Folie in eine nachfolgend noch näher erläuterte Kaschierfolie einbezogen, dann zeichnet sich die auf einen beliebigen Gegenstand aufkaschierte Folie durch eine merklich herabgesetzte Schreib- und Kratzempfindlichkeit, optimale Steifigkeit und Härte aus.

Die erfindungsgemäße Folie läßt sich in vielfältiger Form in den verschiedensten und vorstehend bereits bezeichneten Anwendungsbereichen einsetzen. So kann diese Folie als solche beispielsweise pigmentiert werden, auf die Rückseite wird dann zweckmäßigerweise eine Primerschicht aufgebracht, der eine Oberflächenbehandlung, beispielsweise eine Coronaentladungsbehandlung, vorausgeht. Darauf kann auf diese Primerschicht eine Klebstoff- sowie gegebenenfalls eine Releaseschicht bzw. abziehbare Schutzfolie aufgebracht werden. Auf die Oberseite der Folie wird vorzugsweise ebenfalls eine Primerschicht, unter vorausgegangener Oberflächenbehandlung mittels Coronaentladung aufgebracht, worauf anschließend ein transparenter Schlußlack, inbesondere auf Polyacrylat- und Polyesterbasis, aufgebracht wird. Die letzte Schicht reduziert erheblich die Schreibempfindlichkeit der Oberfläche der Oberfolie.

Ein besonders bevorzugter Anwendungsfall der erfindungsgemäßen Folie sieht folgende Gestaltung einer Verbundfolie vor: Hierbei wird die obere Seite der Oberfolie in der vorstehend beschriebenen Weise behandelt. Auf der Unterseite folgt nach der Primerschicht (bei vorausgegangener Coronabehandlung) eine Druckdekorschicht, die durch die transparente Oberfolie sichtbar ist. Die Oberseite kann eine Prägung aufweisen. Der oben angesprochenen Druckdekorschicht folgt eine Unterfolie, die mit der in oben beschriebener Weise ausgebildeten Oberfolie durch thermisches Laminieren verbunden wird. Auf der Rückseite der Unterfolie, die vorzugsweise aus denselben Komponenten wie die Oberfolie besteht, jedoch pigmentiert ist, um die Dekorwirkungen hervorzuheben, folgt wiederum eine Primerschicht (unter vorausgegangener Coronabehandlung), der eine Haftklebeschicht und gegebenenfalls eine Releaseschicht, beispielsweise in Form von Silikonpapier, folgt. Bei der oben angesprochenen Verbundfolie, die eine Ober- und eine Unterfolie aufweist, ist die Oberfolie vorzugsweise etwa 100 bis 300 µm, insbesondere etwa 150 bis 250 µm, und die Verbundfolie selbst etwa 400 bis 800 um, insbesondere 400 bis 600 µm, dick. Die die erfindungsgemäße Folie enthaltende Verbundfolie eignet sich besonders als selbstklebende Dekorfolie zur Beschichtung von Glas, Blechen, Papier, Pappe sowie anderen Gegenständen oder Formteilen aus Metall, Holz, Holzwerkstoff und Kunststoff.

Mit der erfindungsgemäßen Folie lassen sich die wünschenswerten physikalischen Eigenschaften einstellen, wie hohe Kerbschlagzähigkeit und hohe Oberflächenspannung unter weitgehendem Ausschluß von Weißbruch. So zeigt sie aufgrund des Herstellungsprozesses Oberflächenspannungen von etwa 46 bis 52 dyn/cm (nach DIN 53 364). Diese liegen deutlich über denjenigen, die bei Oberflächenfolien des eingangs geschilderten Standes der Technik erzielt werden (dort 36 bis 38 dyn/cm). Hohe Oberflächenspannungswerte verbessern die Bedruckbarkeit beim Aufbringen von beispielsweise farbigen Mustern und die Haftung an einer Klebstoffschicht. Darüber hinaus zeichnet sich die erfindungsgemäße Folie durch günstige Werte des E-Moduls, der Zugfestigkeit, der Härte, der Lichtechtheit sowie der Heißlichtechtheit aus. Ferner zeigt sie eine sehr geringe Schreibempfindlichkeit, eine hohe Kratzfestigkeit, eine gute chemische Beständigkeit und erfüllt in hohem Maße die Anforderungen der Lichtechtheit (nach DIN 54 004). Durch die angesprochene Möglichkeit des Lackauftrags wird die chemische Beständigkeit gewährleistet. Das Material kann auf herkömmlichen Produktionsanlagen kalandriert und extrudiert werden. Die Oberfläche kann durch eine Prägeeinrichtung mit unterschiedlicher Narbung versehen werden. Im Rahmen der Erfindung ist zur Erzielung der angestrebten Effekte kein Einsatz metall- oder schwefelhaltiger Stabilisatoren erforderlich, anders als bei PVC-haltigen Kunststoffgemischen, die deren Einsatz zwingend erfordern. Darüber hinaus benötigt die erfindungsgemäße Folie keine Weichmacher. Sie ist halogenfrei, was im Hinblick auf ein thermisches Recycling von Vorteil ist. Sie zeigt ein günstiges Alterungsverhalten bei dunkler Wärmeeinwirkung (ohne Lichteinwirkung). Auch läßt sich im Rahmen der Erfindung die gewünschte Härte optimieren, so daß damit die bereits angesprochene Kratz- und Schreibempfindlichkeit günstig beeinflußt wird. Die erfindungsgemäße Folie läßt sich in vielfältiger Weise auf unterschiedliche Substrate aufkaschieren, insbesondere in Form der angesprochenen Verbundfolien. Dabei besteht die Möglichkeit, das Kaschieren auf den Träger und das Verformen gleichzeitig durchzuführen, so z.B. bei nichtflächigen Oberflächen. Entsprechende Vorrichtungen arbeiten z.B. mit den Membranen, Luftdruck und Verformungswalzen.

Nachfolgend soll die Erfindung anhand von Beispielen noch näher erläutert werden.

### Beispiele 1 bis 3:

Anhand der sich aus der nachfolgenden Tabelle ergebenenden Rezepturen wurden mittels eines 5-L-Walzenkalanders pigmentierte Oberfolien einer Stärke von etwa 0,2 mm hergestellt. Diese Oberfolien wurden bezüglich verschiedener Eigenschaften gemessen, die ebenfalls von der nachfolgenden Tabelle erfaßt werden.

**Tabelle**

| Rohstoffe | Zusammensetzung (in Gew.-%) | | |
|---|---|---|---|
| | Beispiel 1 | Beispiel 2 | Beispiel 3 |
| Homopolymerisat des Propylens | | | |
| (MFI-Wert (230°C/2,16kg) etwa 1,1g/10min); Schmelzpunkt Tm etwa 164-166°C (DSC); E-Modul 1135 N/mm² | 80 | 60 | 50 |

| Homopolymerisat des Ethylens | | | |
|---|---|---|---|
| (MFI-Wert (190°C/2,16kg) 2,3g/10min); Schmelzpunkt Tm 110 bis115°C; E-Modul 230 N/mm² | 10 | 10 | 10 |

| Ethylen-Propylen-Copolymerisat | | | |
|---|---|---|---|
| (MFI-Wert (230°C/2,16kg) 1,5 g/10min); Schmelzpunkt Tm etwa 144 bis 150°C (DSC) E-Modul 550 N/mm² | 10 | 30 | 40 |
| Primäres Antioxidanz sterisch gehindertes Phenol (Hostanox 03 der Firma Hoechst AG) Bis [3,3-bis-(4'-hydroxy-3'-tert.-butylphenyl)-butansäure]-glykolester | 0,2 | 0,2 | 0,2 |
| UV-Absorber: sterisch gehindertes Amin (Hostavin N20 der Firma Hoechst AG) | 0,3 | 0,3 | 0,3 |
| Pigment/Füllstoff Titandioxid | 6 Teile*) | 6 Teile*) | 6 Teile*) |

| Eigenschaften | | | |
|---|---|---|---|
| Lichtechtheit nach DIN 54 004 | 7-8 | 7-8 | 7-8 |
| chemische Beständigkeit nach DIN 68 861-1B | in Ordnung | dgl. | dgl. |
| Kratzfestigkeit nach DIN 68862-4C | in Ordnung | dgl. | dgl. |
| Shore-Härte D nach DIN 53 505 | 71 | 68 | 66 |

| | | | |
|---|---|---|---|
| *) Bezogen auf 100 Teile der Polymermischung | | | |

## Patentansprüche

1. Kunststoffolie auf der Basis von Polymerisaten des Propylens und Ethylens, die gegebenenfalls Verarbeitungshilfsmittel, Füllstoffe, Pigmente oder andere Zusatzmittel enthält, dadurch gekennzeichnet, daß sie
a) ein Polymerisat des Propylens mit bis zu 10 Mol-% eines oder mehrerer Comonomere mit einem MFI-Wert (230°C/2,16kg) von 0,8 bis 3,0g/10min, einem Schmelzpunkt Tm von 154 bis 168°C (bestimmt mit DSC) und einem E-Modul von 900 bis 1500 N/mm² (bestimmt nach DIN 53 457),
b) ein Polymerisat des Ethylens mit bis zu 10 Mol-% eines oder mehrerer Comonomere mit einem MFI-Wert (190°C/2,16kg) von 1,5 bis 3,0g/10min, einem Schmelzpunkt Tm von 110 bis 130°C und einem E-Modul von 200 bis 400 N/mm² und
c) ein Ethylen-Propylen-Copolymerisat mit einem MFI-Wert (230°C/2,16kg) von 1 bis 4g/10min, einem Schmelzpunkt Tm von 140 bis 155°C und einem E-Modul von 400 bis 700 N/mm² enthält,
wobei auf 100 Gew.-Teile Polymerisat des Propylens 5 bis 20 Gew.-Teile des Polymerisats des Ethylens und 5 bis 40 Gew.-Teile des Ethylen-Propylen-Copolymerisats entfallen.

2. Folie nach Anspruch 1, dadurch gekennzeichnet, daß sie
a) ein Polymerisat des Propylens mit bis zu 10 Mol-% eines oder mehrerer Comonomere mit einem MFI-Wert (230°C/2,16kg) von 1 bis 2g/10min, einem Schmelzpunkt Tm von 158 bis 164°C und einem E-Modul von 1100 bis 1300 N/mm², insbesondere in Form eines CR-Produktes, und
b) ein Polymerisat des Ethylens mit bis zu 10 Mol-% eines oder mehrerer Comonomere mit einem MFI-Wert (190°C/2,16kg) von 1,8 bis 2,8g/10min, einem Schmelzpunkt Tm von 112 bis 120°C und einem E-Modul von 250 bis 350 N/mm² enthält.

3. Kunststoffolie nach Anspruch 1 oder 2, dadurch gekennzeichnet, daß sei ein niedrig-dichtes Polymerisat des Ethylnes mit linearer Struktur (LLDPE) und/oder ein unter hohem Druck hergestelltes Polyethylen niedriger Dichte (LDPE) enthält.

4. Folie nach Anspruch 2 oder 3, dadurch gekennzeichnet, daß auf 100 Gew.-Teile Polymerisat des Propylens 8 bis 12 Gew.-Teile Polymerisat des Ethylens entfallen.

5. Folie nach einem der Ansprüche 1 bis 4, dadurch gekennzeichnet, daß auf 100 Gew.-Teile Polymerisat des Propylens 10 bis 25 Gew.-Teile des Ethylen-Propylen-Copolymerisats entfallen.

6. Folie nach einem der Ansprüche 1 bis 5, dadurch gekennzeichnet, daß das Ethylen-Propylen-Copolymerisat einen MFI-Wert (230°C/2,16kg) von 1,2 bis 2,0g/10min, einen Schmelzpunkt Tm von 142 bis 120°C und einen E-Modul von 500 bis 600N/mm² aufweist.

7. Folie nach mindestens einem der vorhergehenden Ansprüche, dadurch gekennzeichnet, daß sie auf der Oberseite eine Lackschicht und/oder eine Prägung bzw. Narbung aufweist, während sich auf der Unterseite eine Klebeschicht und gegebenenfalls darauf eine Releaseschicht befindet.

8. Verbundfolie mit einer Kunststoffolie nach mindestens einem der vorhergehenden Ansprüche als Oberfolie sowie mit üblichen Primerschichten, dadurch gekennzeichnet, daß die Oberfolie pigmentiert und/oder mit einer Prägung versehen ist.

9. Verbundfolie mit einer Kunststoffolie nach mindestens einem der vorhergehenden Ansprüche als Oberfolie sowie mit üblichen Primerschichten, dadurch gekennzeichnet, daß die Oberfolie transparent ist und auf ihrer Unterseite mit einer Farbdruckschicht versehen ist, der eine schützende Unterfolie, eine Klebstoffschicht sowie eine Releaseschicht folgen.

10. Verbundfolie nach Anspruch 9, dadurch gekennzeichnet, daß die Oberfolie etwa 100 bis 300 µm, insbesondere etwa 150 bis 250 µm, und die Verbundfolie etwa 400 bis 800 µm, insbesondere 400 bis 600 µm, dick ist.

11. Verwendung der Verbundfolie nach den Ansprüchen 8 bis 10 als selbstklebende Dekorfolie zur Beschichtung von Glas, Blechen, Papier, Pappe sowie anderen Gegenständen oder Forrnteilen aus Metall, Holz, Holzwerkstoff und Kunststoff.

## Claims

1. Plastic film based on polymerisates of propylene and ethylene, which optionally contain processing adjuvants, fillers, pigments or other additives, characterised in that it includes
a) a polymerisate of propylene with up to 10 mol.% of one or more comonomers with a Melt Flow Index value (230°C/2.16kg) of 0.8 to 3.0g/10min, a melting point Tm of 154 to 168°C (determined by Differential Scanning Calorimetry) and a modulus of elasticity of 900 to 1500 N/mm² (determined in accordance with DIN 53 457),
b) a polymerisate of ethylene with up to 10 mol.% of one or more comonomers with a Melt Flow Index value (190°C/2.16kg) of 1.5 to 3.0g/10min, a melting point Tm of 110 to 130°C and a modulus of elasticity of 200 to 400 N/mm² and
c) an ethylene-propylene copolymerisate with a Melt Flow Index value (230°C/2.16kg) of 1 to 4g/10min, a melting point Tm of 140 to 155°C and a modulus of elasticity of 400 to 700 N/mm²,
whereby 5 to 20 parts by wt. of the polymerisate of the ethylene and 5 to 40 parts by wt. of the ethylene-propylene copolymerisate are apportioned to 100 parts by wt. polymerisate of the propylene.

2. Film as claimed in Claim 1, characterised in that it contains
a) a polymerisate of propylene with up to 10 mol.% of one or more comonomers with a Melt Flow Index value (230°C/2.16kg) of 1 to 2g/10min, a melting point Tm of 158 to 164°C and a modulus of elasticity of 1100 to 1300 N/mm², particularly in the form of a Controlled Rheology product, and
b) a polymerisate of ethylene of up to 10 mol.% of one or more comonomers with a Melt Flow Index value (190°C/2.16kg) of 1.8 to 2.8g/10min, a melting point Tm of 112 to 120°C and a modulus of elasticity of 250 to 350 N/mm².

3. Plastic film as claimed in Claim 1 or 2, characterised in that it contains a low density polymerisate of ethylene with a linear structure (LLDPE) and/or a polyethylene of low density produced under high pressure (LDPE).

4. Film as claimed in Claim 2 or 3, characterised in that 8 to 12 parts by wt. polymerisate of the ethylene are apportioned to 100 parts by wt. polymerisate of the propylene.

5. Film as claimed in one of Claims 1 to 4, characterised in that 10 to 25 parts by wt. of the ethylene-propylene copolymerisate are apportioned to 100 parts by wt. polymerisate of the propylene.

6. Film as claimed in one of Claims 1 to 5, characterised in that the ethylene-propylene copolymerisate has a Melt Flow Index value (230°C/2.16kg) of 1.2 to 2.0g/10/min, a melting point Tm of 142 to 120°C and a modulus of elasticity of 500 to 600 N/mm².

7. Film as claimed in at least one of the preceding claims, characterised in that it has a lacquer layer and/or embossing or graining on its upper surface whilst an adhesive layer, and optionally a release layer thereon, is situated on its underside.

8. Composite film including a plastic film as claimed in at least one of the preceding claims as the upper layer and including conventional primer layers, characterised in that the upper layer is pigmented and/or provided with embossing.

9. Composite film including a plastic film as claimed in at least one of the preceding claims as the upper layer and including conventional primer layers, characterised in that the upper layer is transparent and is provided on its underside with a colour printed layer which is followed by a protective lower layer, an adhesive layer and a release layer.

10. Composite film as claimed in Claim 9, characterised in that the upper layer is about 100 to 300 µm, particularly about 150 to 250 µm, thick and the composite film is about 400 to 800 µm, particularly 400 to 600 µm, thick.

11. Use of the composite film as claimed in Claims 8 to 10 as a self-adhesive decorative film for coating glass, sheet metal, paper, cardboard and other articles or moulded components of metal, wood, wood material and plastic.

## Revendications

1. Feuille de matière plastique à base de polymères de propylène et d'éthylène, qui contient le cas échéant des auxiliaires de mise en oeuvre, des charges, des pigments ou d'autres additifs, caractérisée en ce qu'elle contient
a) un polymère de propylène avec jusqu'à 10 moles % d'un ou plusieurs comonomères ayant une valeur d'indice de fluidité à l'état fondu (230°C/2,16 kg) de 0,8 à 3,0 g/10 min, un point de fusion Tm de 154 à 168°C (déterminé par analyse calorimétrique différentielle) et un module d'élasticité de 900 à 1500 N/mm² (déterminé selon la norme DIN 53 457),
b) un polymère d'éthylène avec jusqu'à 10 moles % d'un ou plusieurs comonomères ayant une valeur d'indice de fluidité à l'état fondu (190°C/2,16 kg) de 1,5 à 3,0 g/10 min, un point de fusion Tm de 110 à 130°C et un module d'élasticité de 200 à 400 N/mm² et
c) un copolymère éthylène-propylène ayant une valeur d'indice de fluidité à l'état fondu (230°C/2,16 kg) de 1 à 4 g/10 min, un point de fusion Tm de 140 à 155°C et un module d'élasticité de 400 à 700 N/mm²,
la proportion de polymère d'éthylène étant de 5 à 20 parties en poids et la proportion de copolymère éthylène-propylène étant de 5 à 40 parties en poids pour 100 parties en poids de polymère de propylène.

2. Feuille suivant la revendication 1, caractérisée en ce qu'elle contient
a) un polymère de propylène avec jusqu'à 10 moles % d'un ou plusieurs comonomères ayant une valeur d'indice de fluidité à l'état fondu (230°C/2,16 kg) de 1 à 2 g/10 min, un point de fusion Tm de 158 à 164°C et un module d'élasticité de 1100 à 1300 N/mm², notamment sous forme d'un produit de rhéologie contrôlée, et
b) un polymère d'éthylène avec jusqu'à 10 moles % d'un ou plusieurs comonomères ayant une valeur d'indice de fluidité à l'état fondu (190°C/2,16 kg) de 1,8 à 2,8 g/10 min, un point de fusion Tm de 112 à 120°C et un module d'élasticité de 250 à 350 N/mm².

3. Feuille de matière plastique suivant la revendication 1 ou 2, caractérisée en ce qu'elle contient un polymère d'éthylène basse densité de structure linéaire (LLDPE) et/ou un polyéthylène basse densité produit sous haute pression (LDPE).

4. Feuille suivant la revendication 2 ou 3, caractérisée en ce que 8 à 12 parties en poids de polymère d'éthylène correspondent à 100 parties en poids de polymère de propylène.

5. Feuille suivant l'une des revendications 1 à 4, caractérisée en ce que 10 à 25 parties en poids du copolymère éthylène-propylène correspondent à 100 parties en poids de polymère de propylène.

6. Feuille suivant l'une des revendications 1 à 5, caractérisée en ce que le copolymère éthylène-propylène présente une valeur d'indice de fluidité à l'état fondu (230°C/2,16 kg) de 1,2 à 2,0 g/10 min, un point de fusion Tm de 142 à 120°C et un module d'élasticité de 500 à 600 N/mm².

7. Feuille suivant au moins l'une des revendications précédentes, caractérisée en ce qu'elle présente à la face supérieure une couche de laque et/ou un gaufrage ou un grainage, tandis qu'une couche d'adhésif éventuellement sous-jacente à une couche anti-adhésive se trouve sur la face inférieure.

8. Feuille composite comprenant une feuille de matière plastique suivant au moins l'une des revendications précédentes ainsi que des couches de fond classiques, caractérisée en ce que la feuille supérieure est pigmentée et/ou pourvue d'un gaufrage.

9. Feuille composite comprenant une feuille de matière plastique suivant au moins l'une des revendications précédentes comme feuille supérieure ainsi que des couches de fond classiques, caractérisée en ce que la feuille supérieure est transparente et porte à sa face inférieure une couche d'impression en couleur suivie d'une couche inférieure protectrice, d'une couche d'adhésif ainsi que d'une couche anti-adhésive.

10. Feuille composite suivant la revendication 9, caractérisée en ce que la feuille supérieure a une épaisseur d'environ 100 à 300 µm, notamment d'environ 150 à 250 µm et la feuille composite a une épaisseur d'environ 400 à 800 µm, notamment de 400 à 600 µm.

11. Utilisation de la feuille composite suivant les revendications 8 à 10 comme feuille de décoration autocollante destinée au revêtement de verre, de tôle, de papier, de carton ainsi que d'autres objets ou pièces façonnées en métal, en bois, en matériau dérivé du bois et en matière plastique.
